# EUROPEAN PATENT APPLICATION

(11) **EP 3 733 747 A1**
(43) Date of publication of application: **04.11.2020**
(21) Application number: 18895561.1
(22) Date of filing: 11.12.2018
(51) Int. Cl.: C08J 5/24, C08G 18/04, C08G 18/67, C08G 18/68, C08G 18/75

(54) **RESIN COMPOSITION FOR CARBON FIBER-REINFORCED PLASTIC MOLDING, MOLDING MATERIAL, MOLDED ARTICLE, AND PRODUCTION METHOD FOR MOLDED ARTICLE**

(30) Priority: 26.12.2017 JP 2017249394
(71) Applicant: DIC Corporation, Tokyo 174-8520 (JP)
(72) Inventor: OSUMI Shigeaki, Takaishi-shi, Osaka 592-0001 (JP); TOMOKUNI Hidehiko, Takaishi-shi, Osaka 592-0001 (JP)
(74) Representative: Gerauer, Marc Philippé
(86) International application number: PCT/JP2018/045433
(87) International publication number: WO 2019/131101

(57) **Abstract**

Provided is a resin composition for carbon fiber-reinforced plastic molding, which contains a radical curable resin (A) having a hydroxy group, an unsaturated monomer (B), and isophorone diisocyanate. The resin composition for carbon fiber-reinforced plastic molding shows little change in viscosity over time, is excellent in storage stability, and can be used to obtain a molded article excellent in various physical properties such as flexural strength, flexural modulus, and interlayer shear strength by various molding methods. Therefore, the molded article can be suitably used in automobile members, railway vehicle members, aerospace vehicle members, watercraft members, housing equipment members, sports members, vehicle members, construction civil engineering members, casings of office automation equipment, and the like.

## Description

### Technical Field

The present invention relates to a resin composition for carbon fiber-reinforced plastic molding from which a molded article excellent in various physical properties such as flexural strength can be obtained, a molding material, a molded article, and a method of producing a molded article.

### Background Art

Carbon fiber reinforced plastic (CFRP) is a high-performance material that can be designed to be lighter in weight, higher in strength and higher in rigidity, and is also excellent in electrical characteristics and corrosion resistance as compared with general structural metal materials. Therefore, in recent years, the use of CFRP as an alternative material to metal materials has been expanding in aerospace structures, structural members for automobiles and motorcycles, large-sized industrial machine parts, sports goods, and the like. Among these members, an application of CFRP to automobile members is actively addressed for a purpose of low fuel consumption and environmental load reduction.

As such a molding material, for example, a fiber-reinforced molding material having a vinyl ester, an unsaturated monomer, a polyisocyanate, a polymerization initiator, and a carbon fiber as essential raw materials is known (see, for example, PTL 1). However, although a molded article excellent in various physical properties can be obtained from the molding material, there has been a problem that the viscosity of the molding material is high and the molding method is restricted.

Therefore, there has been a demand for a material from which a molded article excellent in various physical properties such as flexural strength can be obtained, even in a molding method using a material having a relatively low viscosity.

### Citation List

### Patent Literature

PTL 1: Japanese Patent No. 6,241,583

### Summary of Invention

### Technical Problem

A problem to be solved by the invention is to provide a resin composition for carbon fiber-reinforced plastic molding showing little change in viscosity over time and excellent in storage stability, from which a molded article excellent in various physical properties such as flexural strength can be obtained, a molding material, and a molded article.

### Solution to Problem

The inventors of the invention have found that a resin composition containing a radical curable resin, an unsaturated monomer, and isophorone diisocyanate is excellent in storage stability, and a molded article excellent in various physical properties such as flexural strength, flexural modulus, and interlayer shear strength can be obtained from the resin composition, and have completed the invention.

That is, the invention relates to a resin composition for carbon fiber-reinforced plastic molding, which contains a radical curable resin (A) having a hydroxy group, an unsaturated monomer (B), and isophorone diisocyanate.

### Advantageous Effects of Invention

The molded article obtained from the resin composition for carbon fiber-reinforced plastic molding of the invention is excellent in various physical properties such as appearance and flexural strength. Therefore, the molded article can be suitably used in automobile members, railway vehicle members, aerospace vehicle members, watercraft members, housing equipment members, sports members, vehicle members, construction civil engineering members, casings of office automation equipment, and the like.

### Description of Embodiments

The resin composition for carbon fiber-reinforced plastic molding of the invention contains a radical curable resin (A) having a hydroxy group, an unsaturated monomer (B), and isophorone diisocyanate.

Examples of the radical curable resin (A) include epoxy (meth)acrylate, urethane (meth)acrylate, polyester (meth)acrylate, and unsaturated polyester. However, low viscosity design of the resin composition is easier, and thus epoxy (meth)acrylate or unsaturated polyester is preferable. These radical curable resins (A) may be used alone or in combination of two or more.

In the invention, " (meth) acrylate" refers to one or both of acrylate and methacrylate, and "(meth) acrylic acid" refers to one or both of acrylic acid and methacrylic acid.

The epoxy (meth)acrylate is obtained, for example, by reacting an epoxy resin with (meth)acrylic acid.

Examples of the epoxy resin include bisphenol type epoxy resin such as bisphenol A type epoxy resin, bisphenol F type epoxy resin, bisphenol fluorene type epoxy resin, and biscresol fluorene type epoxy resin, novolak type epoxy resin such as phenol novolak type epoxy resin and cresol novolak type epoxy resin, oxodolidone-modified epoxy resin, glycidyl ether of phenol such as brominated epoxy resin of these resins, glycidyl ether of polyhydric alcohol such as dipropylene glycol diglycidyl ether, trimethylolpropane triglycidyl ether, diglycidyl ether of alkylene oxide adduct of bisphenol A, and diglycidyl ether of hydrogenated bisphenol A, alicyclic epoxy resin such as 3,4-epoxy-6-methylcyclohexylmethyl-3,4-epoxy-6-methylcyclo hexanecarboxylate and 1-epoxyethyl-3,4-epoxycyclohexane, glycidyl ester such as phthalic acid diglycidyl ester, tetrahydrophthalic acid diglycidyl ester, diglycidyl-p-oxybenzoic acid, and dimer acid glycidyl ester, glycidylamine such as tetraglycidyldiaminodiphenylmethane, tetraglycidyl-m-xylenediamine, triglycidyl-p-aminophenol, and N,N-diglycidylaniline, and heterocyclic epoxy resin such as 1,3-diglycidyl-5,5-dimethylhydantoin and triglycidyl isocyanurate. Among these resins, a bifunctional aromatic epoxy resin is preferable, and a bisphenol A type epoxy resin and a bisphenol F type epoxy resin are more preferable because they are excellent in molded article strength, handleability of molding material, and fluidity at molding of the molding material. These epoxy resins may be used alone or in combination of two or more.

The reaction of the epoxy resin with (meth) acrylic acid is preferably carried out at 60 to 140°C using an esterification catalyst. Moreover, a polymerization inhibitor or the like may also be used.

Examples of the unsaturated monomer (B) include styrene compounds such as styrene, methylstyrene, halogenated styrene, and divinylbenzene; monofunctional (meth)acrylate compounds such as methyl (meth)acrylate, ethyl (meth)acrylate, propyl (meth)acrylate, butyl (meth)acrylate, 2-ethylhexyl (meth)acrylate, cyclohexyl (meth)acrylate, isoboronyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, and dicyclopentanyl methacrylate; and hydroxy group-containing (meth)acrylate compounds such as hydroxyethyl (meth)acrylate, hydroxypropyl (meth)acrylate, and hydroxybutyl (meth)acrylate; and di(meth)acrylate compounds such as ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate. However, among these compounds, an unsaturated monomer having an aromatic group is preferable because a molded article having higher strength can be obtained. These unsaturated monomers may be used alone or in combination of two or more.

The mass ratio ((A)/(B)) of the radical curable resin (A) and the unsaturated monomer (B) is preferably in the range of 30/70 to 70/30, and more preferably in the range of 40/60 to 60/40 because the balance between resin impregnability to carbon fiber, curability, and mechanical properties of the molded article is further improved.

The content of the isophorone diisocyanate is preferably 0.1 to 5% by mass, more preferably 0.3 to 4% by mass, and further preferably 0.5 to 3% by mass based on a total amount of the radical curable resin (A) and the unsaturated monomer (B) because the balance between storage stability and mechanical properties such as flexural strength of the molded article is further improved.

The resin composition for carbon fiber-reinforced plastic molding of the invention contains the radical curable resin (A) having a hydroxy group, the unsaturated monomer (B), and the isophorone diisocyanate. However, it is preferable that the resin composition for carbon fiber-reinforced plastic molding further contains a polymerization inhibitor.

Examples of the polymerization inhibitor include hydroquinone, trimethylhydroquinone, p-t-butylcatechol, t-butylhydroquinone, tolhydroquinone, p-benzoquinone, naphthoquinone, hydroquinone monomethyl ether, phenothiazine, copper naphthenate, and copper chloride. These polymerization inhibitors may be used alone or in combination of two or more.

The resin composition for carbon fiber-reinforced plastic molding of the invention is obtained, for example, by mixing isophorone diisocyanate, and optionally other components with the radical curable resin (A) diluted by the unsaturated monomer (B).

The molding material of the invention contains the resin composition for carbon fiber-reinforced plastic molding, a polymerization initiator, and a carbon fiber-reinforced material.

The polymerization initiator is not particularly limited. However, the polymerization initiator is preferably organic peroxide, such as a diacyl peroxide compound, a peroxy ester compound, a hydroperoxide compound, a ketone peroxide compound, an alkyl perester compound, a percarbonate compound, or peroxyketal, which may be suitably selected according to molding conditions. These polymerization initiators may be used alone or in combination of two or more.

In addition, examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxy-2-ethylhexanoate, t-butylperoxydiethyl acetate, t-butylperoxyisopropyl carbonate, t-amylperoxyisopropyl carbonate, t-hexylperoxyisopropyl carbonate, di-t-butylperoxyhexahydroterephthalate, t-amylperoxytrimethylhexanoate, t-amylperoxy-2-ethylhexanoate, t-butylperoxy-3,5,5-trimethylhexanoate, t-butylperoxy-benzoate, di-(4-t-butylcyclohexyl)-peroxydicarbonate, methyl ethyl ketone peroxide, acetylacetone peroxide, cumene hydroperoxide, and benzoyl peroxide.

The content of the polymerization initiator is preferably 0.3 to 3% by mass based on the total amount of the radical curable resin (A) and the unsaturated monomer (B) because both the curing characteristics and the storage stability are excellent.

The carbon fiber-reinforced material includes carbon fiber alone, or carbon fiber in combination with other inorganic fiber such as glass fiber, organic fiber, or the like, as needed.

As the carbon fiber, various types such as polyacrylonitrile type, pitch type, and rayon type may be used. Among these types, polyacrylonitrile type is preferable because carbon fibers having high strength can be easily obtained.

The form of the carbon fiber-reinforced material may be a unidirectional fabric in which fiber directions are aligned substantially in the same direction and carbon fibers are integrated by an auxiliary weft or a binder, a bidirectional fabric in which at least carbon fibers are crossed in two directions, a multi-axial fabric in which carbon fibers are crossed in multiple directions, and a multi-axial stitch substrate in which sheets, in which carbon fibers are aligned in one direction, are laminated in multiple directions and integrated by stitch yarns. In addition, braids, non-woven fabrics and mats using discontinuous fibers, and further, preforms formed by laminating, shaping, and fixing with a binder, a stitch or the like, may be used.

The content of the carbon fiber-reinforced material in the molding material of the invention is preferably 30 to 70% by volume, and more preferably 45 to 65% by volume because the mechanical properties of the obtained molded article are further improved. When the carbon fiber content is low, there is a possibility that a high-strength molded article cannot be obtained. When the carbon fiber content is high, the resin impregnability to the fiber is insufficient and the molded article swells, and thus there is still a possibility that a high-strength molded article cannot be obtained.

As a component of the molding material of the invention, components other than the resin composition for carbon fiber-reinforced plastic molding, the polymerization initiator, and the carbon fiber-reinforced material may be used. For example, a thermosetting resin other than the radical curable resin (A), a thermoplastic resin, a curing accelerator, a filler, a low shrinkage agent, a mold releasing agent, a thickener, a viscosity reducing agent, a pigment, an antioxidant, a plasticizer, a flame retardant, an antibacterial agent, an ultraviolet stabilizer, a reinforcing material, a light curing agent, or the like may be contained.

Examples of the thermosetting resin include acrylic resin, epoxy resin, phenol resin, melamine resin, and furan resin. In addition, these thermosetting resins may be used alone or in combination of two or more.

Examples of the thermoplastic resin include polyamide resin, polyethylene terephthalate resin, polybutylene terephthalate resin, polycarbonate resin, urethane resin, polypropylene resin, polyethylene resin, polystyrene resin, acrylic resin, polybutadiene resin, polyisoprene resin, and resins obtained by modifying the aforementioned resins by copolymerization and the like. In addition, these thermoplastic resins may be used alone or in combination of two or more.

Examples of the curing accelerator include metal soaps such as cobalt naphthenate, cobalt 2-ethylhexanoate, vanadyl 2-ethylhexanoate, copper naphthenate, and barium naphthenate, and metal chelate compounds such as vanadyl acetyl acetate, cobalt acetyl acetate, and iron acetyl acetonate. Examples of the amine compound include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators may be used alone or in combination of two or more.

Examples of the filler include inorganic compounds and organic compounds, which may be used to adjust physical properties such as strength, elastic modulus, impact strength, and fatigue durability of the molded article. These fillers may be used alone or in combination of two or more.

Examples of the inorganic compound include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, aluminum hydroxide, crystalline limestone (kansuiseki), zirconium oxide, antimony trioxide, titanium oxide, molybdenum dioxide, and iron powder.

Examples of the organic compound include natural polysaccharide powder such as cellulose and chitin, and synthetic resin powder. As the synthetic resin powder, powder of an organic matter composed of hard resin, soft rubber, elastomer, polymer (copolymer) or the like, or particles having a multilayer structure such as a core-shell type may be used. Examples thereof include particles composed of butadiene rubber and/or acrylic rubber, urethane rubber, silicon rubber or the like, polyimide resin powder, fluororesin powder, phenol resin powder and the like.

Examples of the mold releasing agent include zinc stearate, calcium stearate, paraffin wax, polyethylene wax, and carnauba wax. Paraffin wax, polyethylene wax, carnauba wax and the like are preferable. These mold releasing agents may be used alone or in combination of two or more.

The molding material of the invention is obtained by mixing the resin composition for carbon fiber-reinforced plastic molding, the polymerization initiator, the carbon fiber-reinforced material, and other components as needed.

The molded article of the invention is a cured product of the aforementioned molding material, and is obtained by a molding method such as hand lay-up molding, RTM (Resin Transfer Molding) molding, VaRTM (Vacuum assisted Resin Transfer Molding) molding, filament winding molding, pultrusion molding, and MMD molding. Among these molding methods, VaRTM is preferable because the low viscosity resin composition for carbon fiber-reinforced plastic molding can be applied more effectively.

In the VaRTM molding method, for example, the pressure inside a molding die formed by shaping the carbon fiber-reinforced material is reduced to 10 kPa or less, and after the resin composition for carbon fiber-reinforced plastic molding is injected, cured and demolded, a carbon fiber-reinforced plastic molded article is obtained. In order to enhance productivity, the impregnation time can be shortened by pressing the resin composition for carbon fiber-reinforced plastic molding at 100 kPa to 12 MPa as needed, and further, the curing time can be shortened by heating and controlling a mold temperature to 60 to 150°C in accordance with the decomposition temperature of the selected curing agent.

The molded article obtained from the resin composition for carbon fiber-reinforced plastic molding of the invention is excellent in flexural strength, flexural modulus, interlayer shear strength or the like. Therefore, the molded article may be suitably used in automobile members, railway vehicle members, aerospace vehicle members, watercraft members, housing equipment members, sports members, vehicle members, construction civil engineering members, casings of office automation equipment, and the like.

### Examples

Hereinafter, the invention will be described in more detail with reference to specific examples. The viscosity of the resin composition is a value measured with a B-type viscometer ("TVB-10M" manufactured by Toki Sangyo Co., Ltd.) .

### (Synthesis Example 1: Synthesis of epoxy methacrylate (1))

754 parts by mass of an epoxy resin ("Epiclon 850" manufactured by DIC Corporation, bisphenol A type epoxy resin, epoxy equivalent 188), and 189 parts by mass of bisphenol A were charged into a 2 L flask equipped with a thermometer, a nitrogen introducing pipe, and a stirrer, and the temperature was raised to 110°C while stirring. Here, 0.40 parts by mass of 2-methylimidazole was added, and the reaction was carried out at 110°C until the epoxy equivalent of the reactant reached 360. Next, 210 parts by mass of methacrylic acid and 0.40 parts by mass of hydroquinone were charged, and the temperature was raised to 90°C under a gas flow in which nitrogen and air were mixed in a ratio of 1:1. Then, 1.00 part by mass of 2-methylimidazole were added thereto, and the temperature was raised to 105°C to continue the reaction. The reaction was completed as the acid value was 16 or less and the epoxy equivalent was 500 or more. After cooling to around 60°C, the reaction product was taken out from the reaction container and the epoxy methacrylate (1) was obtained.

### (Synthesis Example 2: Synthesis of unsaturated polyester (1))

460 parts by mass of neopentyl glycol and 166 parts by mass of propylene glycol were charged into a 2 L flask equipped with a thermometer, a nitrogen introducing pipe, and a stirrer under a nitrogen atmosphere. Stirring was started, 273 parts by mass of isophthalic acid were added thereto, and the temperature was raised toward 215°C. After reaching 215°C, the reaction was carried out until the acid value became 3 or less while maintaining the reaction temperature. Thereafter, the temperature was cooled to 140°C, 471 parts by mass of maleic anhydride were charged, and the temperature was raised again to 210°C. Then, the reaction at 210°C was continued while checking the dilution viscosity (Gardner bubble viscosity) and the dilution acid value at 36% by mass of styrene monomer. The reaction was completed at a dilution viscosity of R-S and a dilution acid value of 8 to 12, and the unsaturated polyester (1) was obtained.

### (Example 1: Preparation and evaluation of resin composition for carbon fiber-reinforced plastic molding (1))

In 100 parts by mass of a resin solution obtained by dissolving 55 parts by mass of epoxy methacrylate (A-1) obtained in Synthesis Example 1 in 45 parts by mass of a styrene monomer, 0.035 parts by mass of p-t-butyl catechol and 1.0 part by mass of isophorone diisocyanate were added to obtain the resin composition for carbon fiber-reinforced plastic molding (1). The viscosity of the resin composition for carbon fiber-reinforced plastic molding (1) was 220 mPa·s at 25°C.

### [Evaluation of storage stability]

For the resin composition for carbon fiber-reinforced plastic molding (1) obtained above, the viscosity at 25°C after the resin composition for carbon fiber-reinforced plastic molding (1) was left at 60°C for two hours was measured, and the storage stability was evaluated according to the following criteria.
A: Viscosity (mPa·s) after two hours is less than 150% of initial viscosity (mPa·s)
B: Viscosity (mPa·s) after two hours is 150% or more of initial viscosity (mPa·s)

### [Production of molded article (1)]

A carbon fiber-reinforced material ("C06343" manufactured by Toray Industries, Inc., plain woven cloth of 3K carbon fiber tow with a filament diameter of 7 µm, 200g/m2) 250 mm × 250 mm: 8 ply, a resin supply line, and a φ6 mm spiral tube as a pressure reducing line were arranged on a flat-plate mold surface (400 mm × 400 mm), and it was further covered with a peel ply ("Bleeder Lease B" manufactured by AIRTECH), a flow media ("Greenflow 75" manufactured by AIRTECH), and a bagging film ("KM1300" manufactured by AIRTECH) in this order. The space between the periphery of the bagging film and the mold surface, and the resin supply hose and the pressure reducing hose were sealed with a sealing tape ("AT-200Y" manufactured by AIRTECH) . The resin supply hose had a length reaching the bottom of a resin tank. In addition, the pressure reducing hose was connected to a vacuum pump via a pressure reducing gauge.

The resin supply hose in front of the resin tank was shut off with vise pliers, and the vacuum pump was operated. Air tightness between the mold and the bagging film was checked, and the pressure was maintained at 10 kPa or lower by the pressure reducing gauge.

While maintaining the above degree of pressure reduction, 0.6 parts by mass of 6% cobalt 2-ethylhexanoate and 3.0 parts by mass of Trigonox 40 (acetylacetone peroxide manufactured by Kayaku Akzo Corporation) were mixed with 300 parts by mass of the resin composition for carbon fiber-reinforced plastic molding (1) and transferred into the resin tank.

The vice pliers of the resin supply hose were released and the injection of resin into the carbon fiber-reinforced material between the mold and the film was started. After the injection into the entire surface of the carbon fiber-reinforced material was completed, the resin supply hose and the pressure reducing hose were shut off with the vice pliers. After gelation at normal temperature, post curing was carried out at 60°C, 80°C and 120°C respectively for one hour to obtain the molded article (1). The plate thickness of the obtained molded article (1) was 2 mm, and the carbon fiber content was 50.5% by volume.

### [Evaluation of flexural strength and flexural modulus]

The molded article (1) obtained above was subjected to a three-point bending test in accordance with JIS K 7074-1988 to measure the flexural strength and the flexural modulus.

### [Evaluation of interlayer shear strength]

The interlayer shear strength of the molded article (1) obtained above was measured in accordance with JIS K 7078-1988.

### (Example 2: Preparation and evaluation of resin composition for carbon fiber-reinforced plastic molding (2))

In 100 parts by mass of a resin solution obtained by dissolving 59 parts by mass of the unsaturated polyester (1) obtained in Synthesis Example 2 in 41 parts by mass of a styrene monomer, 0.025 parts by mass of methylhydroquinone and 2.7 parts by mass of isophorone diisocyanate were added to obtain the resin composition for carbon fiber-reinforced plastic molding (2). The viscosity of the resin composition for carbon fiber-reinforced plastic molding (2) was 200 mPa·s at 25°C. The storage stability was evaluated in the same manner as in Example 1.

A molded article (2) was produced and various evaluations were conducted in the same manner as in Example 1, except that the resin composition for carbon fiber-reinforced plastic molding (1) used in Example 1 was changed to the resin composition for carbon fiber-reinforced plastic molding (2), and Trigonox 40 (acetylacetone peroxide manufactured by Kayaku Akzo Corporation) was changed to Permek N (methyl ethyl ketone peroxide manufactured by NOF Corporation). The plate thickness of the obtained molded article (2) was 2 mm, and the carbon fiber content was 50.0% by volume.

### (Comparative Example 1: Preparation and evaluation of resin composition for carbon fiber-reinforced plastic molding (R1))

The resin composition for carbon fiber-reinforced plastic molding (R1)was obtained in the same manner as in Example 1 except that the isophorone diisocyanate added in Example 1 was not added. The viscosity of the resin composition for carbon fiber-reinforced plastic molding (R1) was 230 mPa·s at 25°C. The storage stability was evaluated in the same manner as in Example 1.

A molded article (R1) was produced and various evaluations were conducted in the same manner as in Example 1, except that the resin composition for carbon fiber-reinforced plastic molding (1) used in Example 1 was changed to the resin composition for carbon fiber-reinforced plastic molding (R1). The plate thickness of the obtained molded article (R1) was 2 mm, and the carbon fiber content was 50.4% by volume.

### (Comparative Example 2: Preparation and evaluation of resin composition for carbon fiber-reinforced plastic molding (R2))

The resin composition for carbon fiber-reinforced plastic molding (R2) was obtained in the same manner as in Example 2 except that the isophorone diisocyanate added in Example 2 was not added. The viscosity of the resin composition for carbon fiber-reinforced plastic molding (R2) was 220 mPa·s at 25°C. The storage stability was evaluated in the same manner as in Example 1.

A molded article (R2) was produced and various evaluations were conducted in the same manner as in Example 1, except that the resin composition for carbon fiber-reinforced plastic molding (1) used in Example 1 was changed to the resin composition for carbon fiber-reinforced plastic molding (R2). The plate thickness of the obtained molded article (R2) was 2 mm, and the carbon fiber content was 50.2% by volume.

### (Comparative Example 3: Preparation and evaluation of resin composition for carbon fiber-reinforced plastic molding (R3))

The resin composition for carbon fiber-reinforced plastic molding (R3) was obtained in the same manner as in Example 1 except that the 1.0 part by mass of isophorone diisocyanate added in Example 1 was changed to 1.2 parts by mass of polymeric MDI ("Millionate MR-200" manufactured by Tosoh Corporation). The viscosity of the resin composition for carbon fiber-reinforced plastic molding (R3) was 220 mPa·s at 25°C. The storage stability was evaluated in the same manner as in Example 1.

A molded article (R3) was produced and various evaluations were conducted in the same manner as in Example 1, except that the resin composition for carbon fiber-reinforced plastic molding (1) used in Example 1 was changed to the resin composition for carbon fiber-reinforced plastic molding (R3). The plate thickness of the obtained molded article (R3) was 2 mm, and the carbon fiber content was 50.0% by volume.

### (Comparative Example 4: Preparation and evaluation of resin composition for carbon fiber-reinforced plastic molding (R4))

The resin composition for carbon fiber-reinforced plastic molding (R4) was obtained in the same manner as in Example 1 except that the 1.0 part by mass of isophorone diisocyanate added in Example 1 was changed to 1.28 parts by mass of modified MDI ("Isonate 143L" manufactured by Dow Chemical Japan Ltd.). The viscosity of the resin composition for carbon fiber-reinforced plastic molding (R4) was 220 mPa·s at 25°C. The storage stability was evaluated in the same manner as in Example 1.

A molded article (R4) was produced and various evaluations were conducted in the same manner as in Example 1, except that the resin composition for carbon fiber-reinforced plastic molding (1) used in Example 1 was changed to the resin composition for carbon fiber-reinforced plastic molding (R4). The plate thickness of the obtained molded article (R4) was 2 mm, and the carbon fiber content was 50.5% by volume.

Evaluation results of the resin compositions for carbon fiber-reinforced plastic molding (1) to (2) and (R1) to (R4) obtained above are shown in Table 1.

**Table 1**

| | | Example 1 | Example 2 | Comparative Example 1 | Comparative Example 2 | Comparative Example 3 | Comparative Example 4 |
|---|---|---|---|---|---|---|---|
| Resin composition for carbon fiber-reinforced plastic molding | | (1) | (2) | (R1) | (R2) | (R3) | (R4) |
| Radical curable resin (A) | Epoxy methacrylate (1) | 55 | | 55 | | 55 | 55 |
| | Unsaturated polyester (1) | | 59 | | 59 | | |
| Unsaturated monomer (B) | Styrene | 45 | 41 | 45 | 41 | 45 | 45 |
| Isocyanate | Isophorone diisocyanate | 1 | 3 | | | | |
| | Polymeric MDI | | | | | 1.2 | |
| | Modified MDI | | | | | | 1.28 |
| Polymerization inhibitor | t-butylcatechol | 0.035 | | 0.035 | | 0.035 | 0.035 |
| | Methylhydroquinone | | 0.025 | | 0.025 | | |
| Storage stability (mPa·s) | | A | A | A | A | B | B |
| Initial viscosity (mPa·s) | | 220 | 200 | 230 | 220 | 220 | 220 |
| Viscosity after two hours at 60°C (mPa·s) | | 240 | 230 | 230 | 220 | 380 | 390 |
| Flexural strength of molded article (MPa) | | 752 | 730 | 491 | 418 | 740 | 760 |
| Flexural modulus of molded article (MPa) | | 49 | 46 | 50 | 45 | 44 | 44 |
| Interlayer shear strength of molded article (MPa) | | 56 | 46 | 27 | 23 | 53 | 54 |

It was found that the resin compositions for carbon fiber-reinforced plastic molding of the invention of Examples 1 and 2 were excellent in storage stability, and the obtained molded articles were excellent in flexural strength, flexural modulus, and interlayer shear strength.

On the other hand, Comparative Examples 1 and 2 are examples in which isophorone diisocyanate, which is an essential component of the invention, was not used; however, it was found that the flexural strength and the interlayer shear strength of the molded articles were insufficient.

Comparative Example 3 is an example in which polymeric MDI was used instead of isophorone diisocyanate, which is an essential component of the invention; however, it was found that the storage stability was insufficient.

Comparative Example 4 is an example in which modified MDI was used instead of isophorone diisocyanate, which is an essential component of the invention; however, it was found that the storage stability was insufficient.

## Claims

1. A resin composition for carbon fiber-reinforced plastic molding, comprising a radical curable resin (A) having a hydroxy group, an unsaturated monomer (B), and isophorone diisocyanate.

2. The resin composition for carbon fiber-reinforced plastic molding according to claim 1, wherein the content of the isophorone diisocyanate is 0.1 to 5% by mass based on a total amount of the radical curable resin (A) and the unsaturated monomer (B).

3. The resin composition for carbon fiber-reinforced plastic molding according to claim 1 or 2, wherein the radical curable resin (A) having a hydroxy group is an epoxy (meth)acrylate and/or an unsaturated polyester.

4. The resin composition for carbon fiber-reinforced plastic molding according to any one of claims 1 to 3, wherein a mass ratio (A)/(B) of the radical curable resin (A) and the unsaturated monomer (B) is 30/70 to 70/30.

5. A molding material comprising the resin composition for carbon fiber-reinforced plastic molding according to any one of claims 1 to 4, a polymerization initiator, and a carbon fiber-reinforced material.

6. A molded article, which is a cured product of the molding material according to claim 5.
